# EUROPEAN PATENT APPLICATION

(11) **EP 1 715 289 A1**
(43) Date of publication of application: **25.10.2006**
(21) Application number: 05075944.8
(22) Date of filing: 21.04.2005
(51) Int. Cl.: G01B 11/06, G01N 21/90

(54) **An optical light reflection method**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: van Nijnatten, Petrus Antonius, 5751 XH Deume (NL)
(74) Representative: Winckels, Johannes Hubertus F.

(57) **Abstract**

The invention provides an optical light reflection method for measuring the actual thickness of a transparent oxide layer having a general thickness of less than 33 nm which layer is applied onto a glass container, in which method use is made of a light source for emitting UV-light to the glass container, means to collect directly reflected light and scattered reflected light from the glass container, and means to determine the thickness of the layer on the basis of the information provided by the reflected light. The invention further relates to an apparatus for carrying out the present invention.

## Description

The present invention relates to an optical light reflection method for measuring the thickness of a transparent oxide layer applied onto a glass or thermoplastic container.

It is well appreciated that a glass container such as a glass bottle needs to be provided with a protective layer before it can be commercially used. The reason being, that glass bottles contact each other while they are being conveyed along a bottle filling line. Consequently, unprotected bottles will show rub marks or abrasions, so-called scuffing. Scuffing has the drawback that the bottles as such look less attractive. Moreover, the possibility exists that the structure of such bottles is weakened, which may especially be risky when the bottle contains a pressurised fluid, which is often the case.

In order to deal with the above problems, a first transparent layer is normally applied on the surface of the container when the glass container, such as a bottle, is still hot from the bottle-forming process. The coating so obtained is therefore normally called a hot end coating. Such transparent layer usually comprises a tin oxide layer. On top of the hot end coating a cold end coating can be provided when the bottles exit the annealing lehr. Such cold end coating normally comprises a polymer layer such as a polyethylene layer and serves to improve the scratch resistance of the glass bottle.

For quality control reasons it is for container manufacturers important to check whether or not the hot end coating and the cold end coating are present on the surface of the bottles, and if so, what the thickness of these coatings is. To that end, the thickness of the coatings needs to be measured along the surface of the container.

In a commercially much applied process use is made of three separate measurements, in each of which use is made of an optical reflection method, using visible light. In a first measurement, the thickness of a tin oxide or silicon oxide is determined along the neck of the bottle and the presence of such oxide is determined at he finish of the bottle. The reason for the latter determination is that the presence of such oxides needs to be avoided because of corrosion problems, which these oxides may cause at the finish when use is made of metal screw caps or crown caps. In this measurement use is made of a contact liquid, such as an oil, which is continuously provided by a pump to maintain the surface of the coating to sufficiently wet. In the second measurement use is made of the similar technology, but separate apparatus for determining the thickness of the tin oxide or silicon oxide coating along the body of the bottle. In the third measurement, the presence of the cold end coating is only qualitatively determined using the same technology, but yet another third apparatus. This third measurement can only be carried out once the bottle has been cooled down because otherwise no effective measurement can be carried out due to the evaporation of the contact liquid.

It will be clear from the above that this known process is troublesome in the sense that a multitude, no less than three separate optical light reflection devices need to be used, and that it is time-consuming since the third measurement can only be carried out when the bottles have cooled down. Further, it would appear that the accuracy of the three measurements leave considerable room for improvement.

Object of the present invention is to provide a more simple, fast and accurate method for the measurement of the thickness of coatings applied on glass or thermoplastic containers.

Surprisingly, it has now been found that this can be realised by means of an optical light reflection method wherein use is made of UV-light and means to collect directly reflected light and scattered reflected light from the glass or thermoplastic container.

Accordingly, the present invention relates an optical light reflection method for measuring the actual thickness of a transparent oxide layer having a general thickness of less than 33 nm which layer is applied onto a glass container, in which method use is made of a light source for emitting UV-light to the glass container, means to collect directly reflected light and scattered reflected light from the glass container, and means to determine the thickness of the layer on the basis of the information provided by the reflected light.

In accordance with the present invention use can be made of a single optical light reflection apparatus for measuring actual the thickness of various coatings having a thickness of less than 33 nm on different parts of bottles, whereby the bottles do not need to be cooled down before the thickness of the cold end coating can be determined, and a high accuracy can be realised.

The mechanism to determine the thickness of layers on the basis of light reflection is as such well known.¹ The means to determine the thickness of the layer on the basis of the information provided by the reflected light suitably comprises a mathematical model which predicts the sum of all reflected light for a given layer thickness taking into account effects like surface roughness and material properties like refractive indices, and a computer algorithm that minimises the difference between measured and calculated reflection by varying the layer thickness in the model, thereby yielding the actual layer thickness. In some cases, where the material properties are constant, an empirically predetermined relation between reflection and layer thickness can be used as well.

Suitably, the means to collect all reflected light (direct and scattered) comprises an integrating sphere. A variety of integrating spheres can be used in accordance with the present invention. ²⁻⁵

Preferably, the integrating sphere comprises a connecting reflection means to guide the direct and scattered reflected light into the integrating sphere. The inner surface of the connecting reflection means may suitably have been provided with a mirror coating such as an aluminium coating.

The UV-light emitted by the light source used in accordance with the present invention has suitably a wavelength in the range of from 250-350 nm, preferably a wavelength in the range of from 275-325 nm, and more preferably a wavelength in the range of from 295-305 nm. Most preferably, the UV-light comprises a single wavelength, for instance 300 nm.

In accordance with the present invention also the thickness of a cold end coating on a glass or thermoplastic container can measured.

In accordance with the present invention any type of glass container may suitably be used. Suitable glass containers include various types of bottles, jars, tumblers and flagons.

Accordingly, the present invention also relates to a method wherein in addition the thickness of a polymeric layer is measured which layer is applied onto the transparent oxide layer.

When also the thickness of such a polymeric layer is measured, the light source preferably emits UV-light which two or more wavelengths.

The transparent oxide layer may suitably comprise a tin oxide layer or a titanium oxide layer. Preferably, the transparent oxide layer comprises a tin oxide layer.

Suitable polymer layers include polyethylene layers.

The thickness of the transparent oxide layer may, depending on its actual application, vary widely, provided that it is less than 33 nm.

The thickness of the polymer layer may vary depending on its actual use.

The present invention further relates to an apparatus for carrying out the method according to the present invention, which apparatus comprises an integrating sphere comprising a connecting reflection means to guide the direct and scattered reflected light into the integrating sphere.

### Example

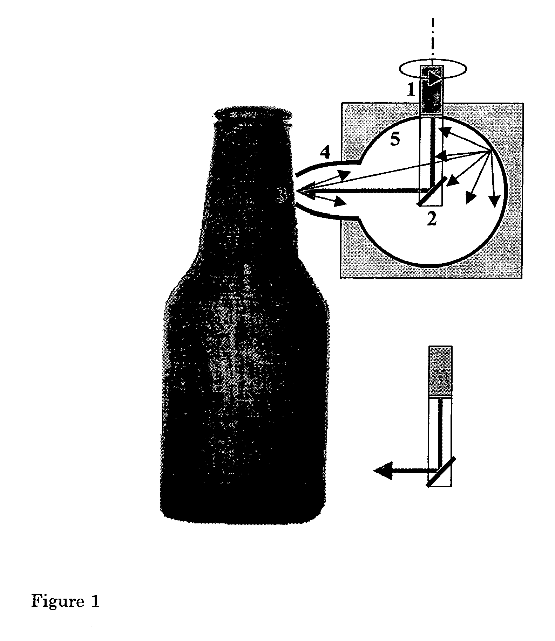

The thickness of a coating on a bottle is determined using the apparatus as shown in Figure 1. A beam from a source 1 is directed towards a mirror 2, which deflects the beam towards a bottle 3, where it is directly reflected and scattered back into an integrating sphere detector 5. A conical reflector 4 is used to help capturing the directly reflected light and scattered light. On the basis of the information provided by the directly reflected light and the scattered light so captured, the thickness of the coating on the bottle 3 is determined.

### References

1. Selected Papers on Characterization of Optical Coatings, ed. M.R. Jacobson, SPIE Milestone Series Vol. MS63, SPIE Optical Engineering Press, 1992, Washington;
2. J.A.J. Jacquez and H.F. Kuppenheim, Theory of the integrating sphere, J.Opt.Soc.Am. 45 (1955), p.460-470;
3. D.G. Goebel, Generalized integrating sphere theory, Appl. Opt. 6 (1967), pp.125-128;
4. M.W. Finkel, Integrating sphere theory, Opt. Commun. 2 (1970), p.25-28;
5. A.Roos and C.G.Ribbing, Interpretation of Integrating Sphere Signal Output for non-Lambertian Samples, Appl. Opt. 27 (1988), p.3833-3837.

## Claims

1. An optical light reflection method for measuring the actual thickness of a transparent oxide layer having a general thickness of less than 33 nm which layer is applied onto a glass container, in which method use is made of a light source for emitting UV-light to the glass container, means to collect directly reflected light and scattered reflected light from the glass container, and means to determine the thickness of the layer on the basis of the information provided by the reflected light.

2. A method according to claim 1, wherein the means to collect direct and scattered reflected light comprises an integrating sphere.

3. A method according to claim 2, wherein the integrating sphere comprises a connecting reflection means to guide the direct and scattered reflected light into the integrating sphere.

4. A method according to claim 3, wherein the UV-light has a wavelength in the range of from 250-350 nm.

5. A method according to claim 4, wherein the UV-light has a wavelength in the range of from 275-325 nm.

6. A method according to claim 5, wherein the UV-light has a wavelength in the range of from 295-305 nm.

7. A method according to claim 6, wherein the UV-light comprises a single wavelength.

8. A method according to any one of claims 1-6, wherein in addition the thickness of a polymeric layer is measured which layer is applied onto the transparent oxide layer.

9. A method according to claim 8, wherein the UV-light comprises two or more wavelengths.

10. A method according to any one of claims 1-9, wherein the transparent oxide layer comprises a tin oxide layer.

11. An apparatus for carrying out the method according to any one of claims 10, which apparatus comprises a light source for emitting UV-light to a glass container, an integrating sphere comprising a connecting reflection means to guide the direct and scattered reflected light into the integrating sphere, and means to determine the thickness of the layer on the basis of the information provided by the reflected light.
